# EUROPÄISCHE PATENTSCHRIFT

(11) **EP 3 999 465 B1**
(45) Veröffentlichungstag und Bekanntmachung des Hinweises auf die Patenterteilung: **07.05.2025**
(21) Anmeldenummer: 20743985.2
(22) Anmeldetag: 15.07.2020
(51) Int. Cl.: B67D 1/08, B67D 1/00

(54) **KARTUSCHENAUFNAHME, KARTUSCHENSYSTEM UND GETRÄNKEZUBEREITUNGSMASCHINE ZUR HERSTELLUNG EINES GETRÄNKS**
CARTRIDGE RECEPTACLE, CARTRIDGE SYSTEM AND BEVERAGE PREPARATION MACHINE FOR PRODUCING A BEVERAGE
LOGEMENT DE CARTOUCHE, SYSTÈME DE CARTOUCHE ET MACHINE DE PRÉPARATION DE BOISSONS POUR PRODUIRE UNE BOISSON

(30) Priorität: 15.07.2019 DE 102019119144
(43) Veröffentlichungstag der Anmeldung: 25.05.2022
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE)
(74) Vertreter: Kutzenberger Wolff & Partner
(86) Internationale Anmeldenummer: PCT/EP2020/069981
(87) Internationale Veröffentlichungsnummer: WO 2021/009214

(56) Entgegenhaltungen:
- WO-A1-2011/084603
- WO-A1-2017/121796
- WO-A1-2019/101997
- WO-A1-96/36556
- WO-A1-96/36557
- WO-A2-2006/005401
- WO-A2-2013/036564
- GB-A- 2 416 757

## Beschreibung

### Stand der Technik

Die vorliegende Erfindung geht aus von einem in eine Getränkezubereitungsmaschine einsetzbaren Kartuschensystem zur Herstellung eines Getränks, insbesondere eines Kaltgetränks, aufweisend eine Kartusche, die ein mit einer Getränkesubstanz gefülltes Reservoir aufweist, und eine mit der Kartusche reversibel verbindbare Kartuschenaufnahme, in welche die Kartusche reversibel einsetzbar ist, und mit einer Kartuschenentladeeinrichtung, welche ein zumindest teilweises Überführen der Getränkesubstanz vom Reservoir in eine Mischkammer bewirkt.

Solche Systeme sind aus dem Stand der Technik, beispielsweise der Druckschrift WO 2019/101997 A1 und der WO 96/36557 A1, grundsätzlich bekannt und werden zur Herstellung von Getränken aus vorportionierten Kartuschen verwendet. Die Herstellung von Getränken mit solchen Systemen ist für den Anwender äußerst komfortabel, da er lediglich eine Kartusche einsetzen und einen Startknopf drücken muss. Die Getränkezubereitungsmaschine übernimmt dann vollautomatisiert die Erzeugung desselben, das heißt insbesondere, dass die Getränkesubstanz mit einer vorbestimmten Menge an Flüssigkeit, insbesondere kaltem und karbonisiertem Wasser vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann.

Eine Herausforderung bei solchen Systemen ist, sicherzustellen, dass das System nur mit systemkompatiblen Kartuschen betrieben wird und keine Getränkeherstellungsprozedur gestartet wird, wenn eine systeminkompatible Kartusche in das System eingesetzt wird. Nur auf diese Weise wird sichergestellt, dass beim Einblasen von Druckluft oder beim Einleiten eines Getränkezubereitungsfluids unter Druck keine Fehlfunktionen auftreten, welche eine Beschädigung der Maschine oder eine Gefährdung oder Verletzung des Benutzers herbeiführen könnten, beispielsweise wenn die Kartusche durch den Druck des eingeleiteten Gases oder Fluids plötzlich platzt.

Zudem ist es wünschenswert, dass maschinenseitig eine Detektion des Kapseltyps ermöglicht wird, damit Parameters des Getränkeherstellungsverfahrens, wie Druck, Temperatur, Volumenstrom und Einleitdauer des Getränkezubereitungsfluids entsprechend angepasst und optimiert werden können.

### Offenbarung der Erfindung

Es ist daher eine Aufgabe der vorliegenden Erfindung ein Kartuschensystem, eine Getränkezubereitungsmaschine, ein System aus einem Kartuschensystems und einer Getränkezubereitungsmaschine zur Herstellung eines Getränks zur Verfügung zu stellen, bei welchem eine Identifizierung der Kartusche in der Getränkezubereitungsmaschine ermöglicht wird.

Diese Aufgabe wird durch ein Kartuschensystem gemäß den Merkmalen des Anspruchs 1, eine Getränkezubereitungsmaschine gemäß den Merkmalen des Anspruchs 9 und ein System gemäß den Merkmalen des Anspruchs 17 gelöst.

Die Erfindung hat gegenüber dem Stand der Technik den Vorteil, dass das Kartuschensystem mit einem Identifikationsmittel versehen ist, anhand welchem das Kartuschensystem in der Getränkezubereitungsmaschine identifiziert werden kann. Auf diese Weise kann seitens der Getränkezubereitungsmaschine nicht nur verifiziert werden, dass es sich bei dem eingesetzten Kartuschensystem um ein systemkompatibles Kartuschensystem handelt, sondern optional auch Parameter zur Zubereitung dieses Kartuschensystems ausgelesen werden. Auf diese Weise können beispielsweise der Druck, der Volumenstrom, die Temperatur, der Einleitungszeitpunkt, die Einleitungsdauer, der Carbonisierungsgrad und/oder der Gleichen des in das Kartuschensystem einzuleitenden Getränkezubereitungsfluids und/oder der Druck, der Volumentrom, die Temperatur, der Einblaszeitpunkt, die Einblasdauer und/oder dergleichen der in das Kartuschensystem einzuleitenden Druckluft vorgegeben werden. Denkbar ist ferner, dass in das Identifikationsmittel das Mindesthaltbarkeitsdatum des in der Kartusche befindlichen Getränks hinterlegt ist, so dass die Getränkezubereitungsmaschine überprüfen kann, ob das Mindesthaltbarkeitsdatum noch nicht überschritten wird. Weiterhin ist denkbar, dass die Getränkezubereitungsmaschine anhand des Identifikationsmittels erkennt, ob sich in der Kartusche eine alkoholhaltige Substanz befindet bzw. die Kartusche zur Herstellung eines alkoholischen Getränks vorgesehen ist. In einem solchen Fall kann ein zusätzlicher Verifikationsschritt vorgesehen sein, welcher dazu vorgesehen ist, eine Alters- und/oder Identifikationsfeststellung des Benutzers, beispielsweise anhand einer Kreditkarte, einem Fingerabdruckleser, einer Gesichtserkennung, eines Logins oder Passworts oder dergleichen, durchzuführen.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass das Identifikationsmittel eine Beschichtung, insbesondere in Form eines Lackes, eines Aufdruckes oder einer Folie, auf einer inneren oder äußeren Oberfläche der Kartusche und/oder der Kartuschenaufnahme umfasst. Denkbar ist, dass die Beschichtung ein optisch auslesbarer Code in Form eines Markers, eines Musters, eines Schriftzuges, eines Bildes, eines Logos, eines ein- oder mehrdimensionalen Barcodes, eines Bitcodes oder dergleichen umfasst. Denkbar ist auch, dass der Marker nur Licht bestimmter Wellenlängen oder Wellenlängenbereichen reflektiert oder absorbiert oder unter Bestrahlung von monochromatischem Licht eine holographische Abbildung repräsentiert. In den Marker, in die Reflexions- oder Absorptionscharakteristika oder in die holographische Abbildung ist insbesondere der Code eingebettet. Denkbar ist auch, dass die Beschichtung eine spezielle Leitfähigkeit, also einen bestimmten elektrischen Widerstand, aufweist, welche den Code, also insbesondere die Systemzugehörigkeit, repräsentiert. Der Code enthält grundsätzlich insbesondere Daten betreffend den Typ der Kartusche oder des Kartuschensystems, die Systemzugehörigkeit, die oben genannten Parameter zur Durchführung des Getränkeherstellungsverfahrens und/oder das Mindesthaltbarkeitsdatum. Die Beschichtung, welche den Code repräsentiert, kann auf eine innere oder äußere Oberfläche des Kartuschensystems aufgeklebt, aufgedruckt, auflackiert, aufgeschrumpft, aufgedampft, aufgesprüht oder dergleichen sein. Wenn die Beschichtung auf einer inneren Oberfläche des Kartuschensystems aufgebracht ist, dann ist diese Beschichtung insbesondere für eine kontaktlose Auslesung, bspw. optisch oder über elektromagnetische Wellen vorgesehen. In diesem Fall umfasst die Beschichtung insbesondere ein Material oder einen Lack, welcher Lebensmittelecht und somit für die Verwendung in Kontakt mit Lebensmitteln zugelassen ist. Wenn die Beschichtung auf einer äußeren Oberfläche aufgebracht ist, dann kann auch eine auf unmittelbarem Kontakt basierende Auslesung in der Getränkezubereitungsmaschine vorgesehen sein. Denkbar ist, dass der Lack oder die Folie, welche das Identifikationsmittel umfasst, durch eine zusätzliche Schutzfolie geschützt ist, welche auf den Lack oder die Folie aufgebracht wird. Die Schutzfolie könnte beispielsweise ein zumindest teiltransparenter Schrumpfschlauch sein, welcher auf die Kartusche aufgeschrumpft wird. Alternativ wäre auch denkbar, dass das Identifikationsmittel als Beschichtung bzw. Aufdruck auf einer Innenseite der Folie realisiert ist, also auf derjenigen Seite der Folie, die der Kartusche bzw. dem Reservoir zugewandt ist und/oder mit dem Kartuschensystem verbunden ist. Vorteilhafterweise wäre das Identifikationsmittel nach dem Aufbringen der Folie auf das Kartuschensystem durch die übrige Folie sodann geschützt. Vorzugsweise handelt es sich bei der Folie sodann um eine Mehrschichtfolie, die aus mehrere übereinanderliegenden Folienlagen aufgebaut ist, wobei insbesondere die innerste Folienlage mit dem Identifikationsmittel versehen ist. Denkbar ist auch, dass das Identifikationsmittel innerhalb der Folie angeordnet ist. Das Identifikationsmittel umfasst dabei vorzugsweise eine Beschichtung oder einen Aufdruck auf eine innenliegende Zwischenlage der als Mehrschichtfolie ausgebildeten Folie. Diese Zwischenlage wird auf seinen beiden Seiten dann durch insbesondere transparente weitere Lagen der Folie vor äußeren Umwelteinflüssen geschützt. Insbesondere braucht es somit keinen Aufdruck aus Lebensmittelfarbe.

Die Begriffe Identifikationsmittel und Identifikationselement und Produktidentifikationskennung werden im Rahmen der vorliegenden Anmeldung insbesondere synonym verwendet.

Erfindungsgemäss ist vorgesehen, dass das Identifikationselement innerhalb des Reservoirs und/oder der Mischkammer angeordnet ist. Erfindungsgemäß ist das Identifikationsmittel somit vor äußeren Umwelteinflüssen und insbesondere vor äußeren mechanischen Einflüssen geschützt, so dass die Gefahr einer Beschädigung desselben ausgeräumt ist.

Denkbar wäre aber auch, dass das Identifikationsmittel ein separates Identifikationselement ist, wie beispielsweise ein RFID-Chip oder ein Magnetelement, welches fixiert oder frei im Reservoir oder in der Mischkammer angeordnet ist. Bei der Herstellung des Kartuschensystems kann dieses Element einfach in das Reservoir oder die Mischkammer eingeworfen werden. Alternativ ist denkbar, dass das Identifikationsmittel ein auf der Innenseite einer zumindest teilweise optisch transparenten Wandung des Reservoirs oder der Mischkammer angeordneter optisch auslesbarer Code, insbesondere ein ein- oder mehrdimensionaler Barcode, ein Muster oder ein Hologramm ist.

Gemäß einer bevorzugten Ausführungsform der vorliegenden Erfindung ist vorgesehen, dass das Identifikationsmittel derart ausgebildet ist, dass es von wenigstens einem Kontaktelement der Getränkezubereitungsmaschine, insbesondere für eine Messung des elektrischen Widerstands des Identifikationsmittels, mittelbar oder unmittelbar elektrisch kontaktierbar ist. Der Code ist in diesem Falle in den elektrischen Widerstand des Identifikationsmittels eingebettet. Zur Messung des elektrischen Widerstandes müssen vorzugsweise wenigstens zwei Kontaktpunkte des Identifikationsmittels von außerhalb des Kartuschensystems kontaktierbar sein. Denkbar ist, dass entweder das Identifikationsmittel vollständig von außerhalb des Kartuschensystems erreichbar ist oder dass wenigstens zwei Kontaktpunkte eines innerhalb des Kartuschensystems angeordneten Identifikationsmittels oder eines in das Material des Kartuschensystems eingebetteten Identifikationsmittels nach außen geführt werden, um von außerhalb erreichbar zu sein. Dabei ist das Identifikationsmittel insbesondere derart ausgebildet, dass es von wenigstens einem Kontaktelement der Getränkezubereitungsmaschine, insbesondere für eine Messung mindestens eines physikalischen Parameters des Identifikationsmittels, kontaktierbar ist. Mit anderen Worten: Das Identifikationsmittel ist insbesondere derart ausgebildet, dass es von Kontaktelementen der Getränkezubereitungsmaschine, insbesondere für eine Messung des elektrischen Widerstands und/oder der elektrischen Leitfähigkeit des Identifikationsmittels, elektrisch kontaktierbar ist.

Gemäß einer bevorzugten Ausführungsform der vorliegenden Erfindung ist vorgesehen, dass die Kartuschenaufnahme einen in das Reservoir mündenden Druckluftanschluss zum Einleiten von Druckluft in das Reservoir umfasst.

Es kann vorgesehen sein, dass die Kartusche oder das Kartuschensystem eine Produktidentifikationskennung aufweist, die insbesondere in einen optisch auslesbaren Code, einen ein- oder mehrdimensionalen Barcode, einen Bitcode, einen RFID-Code, einen QR-Code, einen Data-Matrix-Code, einen Farbcode oder einen Hologrammcode eingebettet ist. In vorteilhafter Weise wird somit ein automatisches Auslesen der Produktidentifikationskennung möglich. Die Produktidentifikationskennung dient insbesondere dazu, die in der Kartusche befindliche Getränkesubstanz anzugeben. Denkbar ist, dass anhand der Produktidentifikationskennung Betriebsparameter der Getränkezubereitungsmaschine, wie beispielsweise Fördermenge, Förderzeit, Förderpausen, Temperatur, Karbonisierungsgrad und/oder Druck des zugeführten Fluids und/oder der zugeführten Druckluft eingestellt werden. Dies geschieht in einer Auswerte- und Steuereinheit der Getränkezubereitungsmaschine, welche eine Vielzahl von vorgespeicherten Getränkeherstellungsprogrammen aufweist, die sich in den Betriebsparametern der Getränkezubereitungsmaschine unterscheiden. Jedes Getränkeherstellungsprogramm ist mit einem oder mehreren Produktidentifikationskennungen verknüpft. Beim Einlegen der Kartusche wird die Produktidentifikationskennung mit dem Kennungsdetektor ausgelesen. Die Auswerte- und Steuereinheit wählt dann das der Produktidentifikationskennung entsprechende Getränkeherstellungsprogramm aus. So können für jedes herzustellende Getränk optimale Betriebsparameter eingestellt werden, insbesondere werden dabei die Start- und Stoppzeitpunkte, Laufzeit sowie die Förderleistung der Fluidförderpumpe und/oder der Luftförderpumpe getränkeindividuell eingestellt. Auch ist denkbar, dass diese Betriebsparameter direkt in die Produktidentifikationskennung eingebettet sind. Die Auswerte- und Steuereinheit liest und wertet die Betriebsparameter aus der Produktidentifikationskennung aus und steuert die Getränkezubereitungsmaschine und insbesondere die Fluidförderpumpe und/oder die Luftförderpumpe entsprechend. Bei dieser Variante brauchen in der Getränkezubereitungsmaschine keine vorgespeicherten Getränkeherstellungsprogramme hinterlegt werden. Die Produktidentifikationsmittel kann entweder das eingangs beschriebene Identifikationsmittel sein oder das Kartuschensystem weist sowohl das oben beschriebene Identifikationsmittel als auch ein separates Produktidentifikationsmittel auf. Denkbar ist, dass mittels des Identifikationsmittels beispielsweise nur die Systemzugehörigkeit geprüft wird, während mittels des Produktidentifikationsmittels der Typ der Getränkesubstanz, des herzustellenden Getränks oder die Betriebsparameter der Getränkezubereitungsmaschine bestimmt werden (oder umgekehrt). Ferner ist denkbar, dass das Identifikationsmittel nur zur Überprüfung der Echtheit oder des Haltbarkeitsdatums der Kartusche herangezogen wird. Ferner ist denkbar, dass nur Kartuschen, die alkoholhaltige Getränkesubstanzen enthalten, mit einem Identifikationsmittel ausgestattet sind, damit seitens der Getränkezubereitungsmaschine eine Altersüberprüfung (siehe oben) durchgeführt wird.

Ferner ist denkbar, dass der Getränkeherstellungsprozess gar nicht erst startet, wenn keine Produktidentifikationskennung identifizierbar ist oder die identifizierte Produktidentifikationskennung zu keinem vorgespeicherten Getränkeherstellungsprogramm passt. In diesem Fall scheitert die im zweiten Verfahrensschritt durchgeführte Erkennung eines "authentifizierten Kartuschensystems". Auf diese Weise wird verhindert, dass eine systeminkompatible Kartusche in der Getränkeherstellungsmaschine verwendet wird, welche für den Betrieb in der Getränkeherstellungsmaschine nicht zertifiziert ist und somit die Gefahr einer Beschädigung der Getränkeherstellungsmaschine oder einer Gefährdung des Benutzers, beispielsweise durch ein Aufplatzen der Kartusche (wenn diese für den Betrieb bei geringeren Drücken vorgesehen ist), bestünde.

Die Produktidentifikationskennung ist vorzugsweise auf die Wandung der Kartusche aufgebracht, insbesondere aufgedruckt oder aufgeklebt. Denkbar wäre aber auch die Produktidentifikationskennung auf das Dichtelement (insbesondere die Dichtfolie) zum Abdichten der Kartuschenöffnung aufzubringen. Insbesondere ist die Produktidentifikationskennung derart auf der Kartusche positioniert, dass die Produktidentifikationskennung innerhalb des Detektionsbereichs des Kennungsdetektors der Getränkezubereitungsmaschine angeordnet ist, wenn die Kartusche in die Getränkezubereitungsmaschine eingesetzt ist. Alternativ wäre auch denkbar, dass die Produktidentifikationskennung nicht auf der Kartusche, sondern auf einer Außenwandung der Kartuschenaufnahme entsprechend angeordnet ist.

Gemäß einer bevorzugten Ausführungsform der vorliegenden Erfindung ist vorgesehen, dass das Getränkesubstrat als Identifikationsmittel fungiert. Vorzugsweise wird die Leitfähigkeit der insbesondere flüssigen Getränkesubstanz im Reservoir gemessen, wenn das Kartuschensystem in die Getränkezubereitungsmaschine eingesetzt ist, und anhand der Leitfähigkeit sodann den Typ des Kartuschensystems, die Kompatibilität des eingesetzten Kartuschensystems und/oder der Getränkesubstanztyp festgestellt. Denkbar ist, dass die Getränkezubereitungsmaschine ein Kontaktelement mit einer Aufstechspitze umfasst, damit das Kontaktelement von außerhalb der Kartusche durch die Kartuschenwandung gestoßen werden kann, um innerhalb der Kartusche die Leitfähigkeit der Getränkesubstanz zu vermessen. Denkbar ist, dass das Kontaktelement anschließend wieder aus der Wandung herausgezogen wird und sich Wandung selbstverschließend ausgebildet ist. Möglich wäre auch, dass im Bereich des Kontaktelement eine Durchgangsöffnung in der Kartuschenwandung vorgesehen ist, die mit einer vorzugsweise selbstverschließenden und durchstechbaren Dichtfolie verschlossen ist. Insbesondere als Sirup ausgebildete Getränkesubstanzen können dabei anhand unterschiedlicher PH-Werte und Zuckeranteile, die eine unterschiedliche Leitfähigkeit des Sirups hervorbringen, voneinander unterschieden werden.

Die erfindungsgemäße Getränkezubereitungsmaschine zur Herstellung eines Getränks, in welche das erfindungsgemäße Kartuschensystem einsetzbar ist, weist eine Halteeinheit auf, in welche die mit der Kartusche verbundene Kartuschenaufnahme einsetzbar ist Die Getränkezubereitungsmaschine weist ferner vorzugsweise wenigstens einen Kennungsdetektor, insbesondere zum optischen Auslesen des Identifikationsmittels beispielsweise in Form einer optischen Kamera (CCD-Kamera) oder eines Scanners auf. Ferner ist denkbar, dass die Getränkezubereitungsmaschine eine Lichtquelle zum optischen Ausleuchten des Identifikationsmittels aufweist.

Denkbar ist ferner, dass die Halteeinheit wenigstens ein Kontaktelement aufweist, welches das Identifikationsmittel des Kartuschensystems kontaktiert, um wenigstens einen physikalischen Parameter des Identifikationsmittels zur Identifikation des Kartuschensystems zu bestimmen. In vorteilhafter Weise kann über den physikalischen Parameter, in welchen insbesondere der Code eingebettet bzw. über welchen das Identifikationsmittel auslesbar ist, das Systemzugehörigkeit des Kartuschensystems geprüft werden. Ferner ist denkbar, dass die Parameter zur Getränkeherstellung ausgelesen werden können. Vorzugsweise umfasst die Getränkezubereitungsmaschine eine mit dem wenigstens einen Kontaktelement verbundene Messeinheit zur Messung des elektrischen Widerstands und/oder der elektrischen Leitfähigkeit des Identifikationsmittels.

Gemäß einer bevorzugten Ausführungsform der vorliegenden Erfindung ist vorgesehen, dass die Getränkezubereitungsmaschine eine Fluidquelle zum Einspeisen eines Fluids in die Fluidzuführung und eine Druckluftquelle zum Einblasen von Druckluft in den Druckluftanschluss aufweist.

Gemäß einer bevorzugten Ausführungsform der vorliegenden Erfindung ist vorgesehen, dass die Halteeinheit ein Auslöseelement aufweist, um ein Aufstechmittel der Kartuschenaufnahme von einer eingefahrenen Position in eine ausgefahrene Position zu überführen. In der ausgefahrenen Position wird ein Aufstechdorn vom Aufstechmittel durch ein Dichtmittel, welches das Getränkemittelreservoir abschließt, gedrückt und perforiert dieses. Um das Getränkereservoir bei Nichtbenutzung abgeschlossen zu lassen und den Aufstechdorn vor Beschädigungen zu bewahren, wird dieser bei Nichtbenutzung nicht vom Aufstechmittel durch das Dichtmittel gedrückt, sondern ist in einer geschützen Position eingefahren. Für den Aufstechvorgang des Dichtelementes muss der Aufstechdorn jedoch ausgefahren werden. Dazu fährt das Aufstechmittel aus und verschiebt den Aufstechdorn in die ausgefahrene Position. Das Ausfahren des Aufstechmittels wird hier in vorteilhafter Weise von dem Auslöseelement der Halteeinheit eingeleitet. Durch die Trennung von Auslösemechanismus auf dem Halteelement einerseits und dem Aufstechmittel mit dem Aufstechdorn an der Kartuschenaufnahme andererseits ist gewährleistet, dass der Aufstechdorn nur ausfährt, wenn die Kartuschenaufnahme in die Halteeinheit eingesetzt wird. Denkbar wäre auch eine geometrische Codierung des Auslösemechanismus', so dass das Aufstechmittel nur ausgefahren wird, wenn eine, der Codierung des Auslösemechanismus' entsprechend codierte, Kartuschenaufnahme eingesetzt wird. Ferner ist es möglich, dass der Auslösemechanismus so positioniert ist, dass das Aufstechmittel nur ausfährt, wenn die Kartuschenaufnahme an der korrekten Stelle in das Halteelement eingesetzt ist. Weiterhin ist es möglich, dass der Auslösemechanismus so gestaltet ist, dass das Aufstechmittel nur ausfährt, wenn die Kartuschenaufnahme nicht schräg zur vorgesehenen Einsetzrichtung und/oder nicht weit genug in die Halteeinrichtung eingesetzt ist.

Gemäß einer bevorzugten Ausführungsform der vorliegenden Erfindung ist vorgesehen, dass die Halteeinheit einen Befestigungsflansch umfasst, welcher die Kartuschenaufnahme beim oder nach dem Einsetzen in die Halteeinheit formschlüssig und/oder kraftschlüssig umgreift. Mit der formschlüssigen und/oder kraftschlüssigen Verbindung der Halteeinheit mit der Kartuschenaufnahme über den Befestigungsflansch ist gewährleistet, dass die Kartuschenaufnahme sicher in der Halteeinheit sitzt. Der Befestigungsflansch kann Kräfte aufnehmen und abführen, welche auf die Kartuschenaufnahme wirken. Denkbar sind hier Kräfte die beim Betrieb der Getränkezubereitungsmaschine entstehen, hervorgerufen beispielsweise durch die anliegende Druckluft. Der Befestigungsflansch kann aber auch Kräfte aufnehmen und abführen, welche von außen auf die Kartuschenaufnahme einwirken. Denkbar wäre hier beispielsweise ein Anstoßen durch den Benutzer. Damit kann in vorteilhafter Weise der korrekte Sitz der Kartuschenaufnahme in der Halteeinheit sichergestellt werden.

Die Produktidentifikationskennung dient insbesondere dazu, die in der Kartusche befindliche Getränkesubstanz anzugeben. Während oder vor dem Start des Getränkezubereitungsprozesses wird die Produktidentifikationskennung mit dem Kennungsdetektor ausgelesen. Auf Seiten der Getränkezubereitungsmaschine ist somit bekannt, welche Art von Kartusche in die Getränkezubereitungsmaschine eingelegt ist. Denkbar ist, dass eine Auswerte- und Steuereinheit der Getränkezubereitungsmaschine eine Vielzahl von vorgespeicherten Getränkeherstellungsprogrammen aufweist, welche zur Zubereitung unterschiedlicher Getränke vorgesehen sind und sich beispielsweise in der Fördermenge, Förderzeit, Förderpausen, Temperatur, Karbonisierungsgrad und/oder Druck des zugeführten Fluids voneinander unterscheiden. Denkbar ist auch, dass bei verschiedenen Getränkeherstellungsprogrammen unterschiedliche Druckluftzufuhren Verwendung finden (bspw. anderer Druck). Jedes Getränkeherstellungsprogramm ist mit einem oder mehreren Produktidentifikationskennungen verknüpft. Wenn eine Kartusche in die Getränkezubereitungsmaschine eingelegt wird, wird die Produktidentifikationskennung auf der Kartusche mit dem Kennungsdetektor ausgelesen und anschließend mit den vorgespeicherten Daten verglichen. Anhand der Produktidentifikationskennung wird somit ein Getränkeherstellungsprogramm aus der Mehrzahl von vorgespeicherten Getränkeherstellungsprogrammen ausgewählt und anschließend der Getränkeherstellungsprozess mit dem ausgewählten Getränkeherstellungsprogramm gestartet. Die Parameter wie Fördermenge, Förderzeit, Förderpausen, Temperatur, Karbonisierungsgrad und/oder Druck des zugeführten Fluids werden durch das ausgewählte Getränkeherstellungsprogramm vorgegeben bzw. gesteuert, um für das mit der jeweiligen Getränkesubstanz herzustellende Getränk optimale Ergebnisse zu erzielen.

Denkbar ist, dass der Getränkeherstellungsprozess gar nicht erst startet, wenn keine Produktidentifikationskennung identifizierbar ist oder die identifizierte Produktidentifikationskennung zu keinem vorgespeicherten Getränkeherstellungsprogramm passt. Auf diese Weise wird verhindert, dass eine systeminkompatible Kartusche in der Getränkeherstellungsmaschine verwendet wird, welche für den Betrieb in der Getränkeherstellungsmaschine nicht zertifiziert ist und somit die Gefahr einer Beschädigung der Getränkeherstellungsmaschine oder einer Gefährdung des Benutzers, beispielsweise durch ein Aufplatzen der Kartusche (wenn diese für den Betrieb bei geringeren Drücken vorgesehen ist), bestünde.

Die Produktidentifikationskennung ist vorzugsweise auf die Wandung der Kartusche oder auf das Dichtelement (insbesondere die Dichtfolie) zum Abdichten der Kartuschenöffnung aufgedruckt oder aufgeklebt. Insbesondere ist die Produktidentifikationskennung derart auf der Kartusche positioniert, dass die Produktidentifikationskennung innerhalb des Detektionsbereichs des Kennungsdetektors der Getränkezubereitungsmaschine angeordnet ist, wenn die Kartusche in die Getränkezubereitungsmaschine eingesetzt ist. Alternativ wäre auch denkbar, dass die Produktidentifikationskennung nicht auf der Kartusche, sondern auf einer Außenwandung der Kartuschenaufnahme entsprechend angeordnet ist. Alternativ wäre ebenfalls denkbar, dass die Produktidentifikationskennung in die Getränkesubstanz integriert ist. Mittels der Leitfähigkeitsmessung kann beispielsweise die Getränkesubstanz und somit der Typ des Kartuschensystems bestimmt werden. Das Kontaktelement zum Messen der Leitfähigkeit wird hierbei insbesondere in das Reservoir eingefahren, um in Kontakt mit der Getränkesubstanz zu gelangen. Denkbar ist, dass die Kartuschenwandung hierfür von dem Kontaktelement durchstoßen wird. Nach der Messung wird das Kontaktelement wahlweise wieder aus dem Reservoir herausgefahren, wobei das resultierende Loch in der Wandung anschließend vorzugsweise wieder verschlossen wird, oder das Kontaktelement verbleibt während des Getränkeherstellungsprozesses teilweise im Reservoir.

Denkbar ist auch, dass die Auswerte- und Steuereinheit der Getränkezubereitungsmaschine registriert, welche Kartuschen und/oder wieviele Kartuschen von einer bestimmten Sorte verwendet wurden. Vorzugsweise weist die Getränkezubereitungsmaschine ein Kommunikationsmodul auf, welches eine Kommunikation zwischen der Getränkezubereitungsmaschine und einem zentralen Diensteanbieter mittels einer Internetverbindung bereitgestellt wird. Der zentrale Diensteanbieter kann beispielsweise ein Server des Herstellers der Getränkezubereitungsmaschine sein, der den Status der Getränkezubereitungsmaschine aus der Ferne überwacht und/oder die Getränkezubereitungsmaschine wartet, überwacht und/oder ggf. repariert. Denkbar ist, dass der zentrale Diensteanbieter beispielsweise die Firmware oder Software der Getränkezubereitungsmaschine prüfen und ggf. aktualisieren kann und/oder die Getränkezubereitungsmaschine neu starten kann. Auch ist denkbar, dass neue Getränkeherstellungsprogramme eingespielt werden (wenn bspw. neue Kartuschen auf den Markt kommen) und/oder die Parameter wie Fördermenge, Förderzeit, Förderpausen, Temperatur, Karbonisierungsgrad und/oder Druck des zugeführten Fluids angepasst werden. Vorzugsweise weist die Getränkeherstellungsmaschine eine Mehrzahl von Sensoren auf, welche von dem zentralen Diensteanbieter auslesbar sind, so dass beispielsweise der Verschmutzungsgrad, der Abnutzungsgrad, die Filterzustände, der Pumpendruck und dergleichen überwacht werden können. Ferner ist denkbar, dass Betriebsparameter der Getränkezubereitungsmaschine ausgelesen werden, welche Aufschluss über die Anzahl an bereits durchgeführten Getränkeherstellungsprozessen ermöglicht. Dabei ist bspw. denkbar, dass die Auswerte- und Steuereinheit Daten an den zentralen Diensteanbieter übermittelt, aus welchen hervorgeht welche und wie viele Kartuschen einer bestimmten Sorte verwendet wurden, so dass beispielsweise gezielte Werbung (zum Beispiel auf dem Display der Getränkeherstellungsmaschine oder auf einer zugehörigen APP) für die bevorzugten Getränke geschaltet werden kann und/oder automatische Nachbestellungen für die verbrauchten Kartuschen einspielbar sind. Vorzugsweise kann über das Display der Getränkeherstellungsmaschine eine Nachbestellung von Kartuschen erfolgen, welche über das Kommunikationsmodul direkt an den zentralen Diensteanbieter übermittelt wird. Ferner ist denkbar, dass eine Sprachsteuerung der Getränkeherstellungsmaschine implementiert ist, wobei die Sprachdaten zur Steuerung der Maschine von einem Mikrophon der Getränkeherstellungsmaschine aufgenommen und sodann zur Auswertung derselben über das Kommunikationsmodul an den zentralen Diensteanbieter übermittelt werden. Ferner ist denkbar, dass die Getränkeherstellungsmaschine eine benutzersensitiven Betriebsmodus mit bspw. personifizierten Menüs oder Einstellung, welche beispielsweise individuell ausgewählte Parametern oder Getränkeherstellungsprogrammen umfassen, bereitstellt, wobei die Benutzerauswahl anhand eines Passworts oder biometrischen Daten, wie Gesichtserkennung, Iris-Scan oder Fingerabdruck erfolgt. Die erhobenen Daten werden insbesondere verschlüsselt an den zentralen Diensteanbieter übermittelt oder dort zur Freischaltung oder Übermittlung des personifizierten Menüs an die entsprechenden Getränkeherstellungsmaschine ausgewertet. Denkbar ist, dass der Benutzer somit an verschiedenen Getränkeherstellungsmaschinen immer sein individuelles Menü und/oder seine individuellen Einstellungen automatisch laden kann.

Gemäß einer bevorzugten Ausführungsform der vorliegenden Erfindung ist vorgesehen, dass die Halteeinheit einen Befestigungsflansch umfasst, welcher die Kartuschenaufnahme beim oder nach dem Einsetzen in die Halteeinheit formschlüssig und/oder kraftschlüssig umgreift.

Gemäß einer bevorzugten Ausführungsform der vorliegenden Erfindung ist vorgesehen, dass das Kontaktelement in den Befestigungsflansch integriert ist.

Das erfindungsgemäße System weist die erfindungsgemäße Getränkezubereitungsmaschine und das in die Halteeinheit einsetzbare erfindungsgemäße Kartuschensystem auf.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- Figur 1: zeigt eine schematische Darstellung der Getränkezubereitungsmaschine ohne eingesetzte Kartuschenaufnahme gemäß einer beispielhaften Ausführungsform der vorliegenden Erfindung.
- Figur 2: zeigt eine schematische Darstellung eines beispielhaften Kartuschensystems.
- Figur 3: zeigt eine schematische Darstellung einer beispielhaften Getränkezubereitungsmaschine mit einem in die Getränkezubereitungsmaschine eingesetzten Kartuschensystem.
- Figuren 4a bis 4c: das Grundprinzip eines nicht erfindungsgemässen Verfahrens zur Herstellung eines Getränks mit dem Kartuschensystem eingesetzt in eine Getränkezubereitungsmaschine gemäß einer beispielhaften Ausführungsform der vorliegenden Erfindung.
- Figur 5: zeigt eine schematische Darstellung des Kartuschensystems gemäß weiterer beispielhafter und der erfindungsgemäßen Ausführungsformen der vorliegenden Erfindung.
- Figuren 6a und 6b: zeigen schematisch die Auslesung der Produktidentifikationskennung des erfindungsgemäßen Systems.
- Figur 7: zeigt eine schematische Darstellung der Getränkezubereitungsmaschine mit einem in die Getränkezubereitungsmaschine eingesetzten Kartuschensystem gemäß einer weiteren beispielhaften Ausführungsform der vorliegenden Erfindung.
- Figur 8: offenbart schematische die Schritte eines beispielhaften Verfahrens zur Herstellung eines Getränks.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

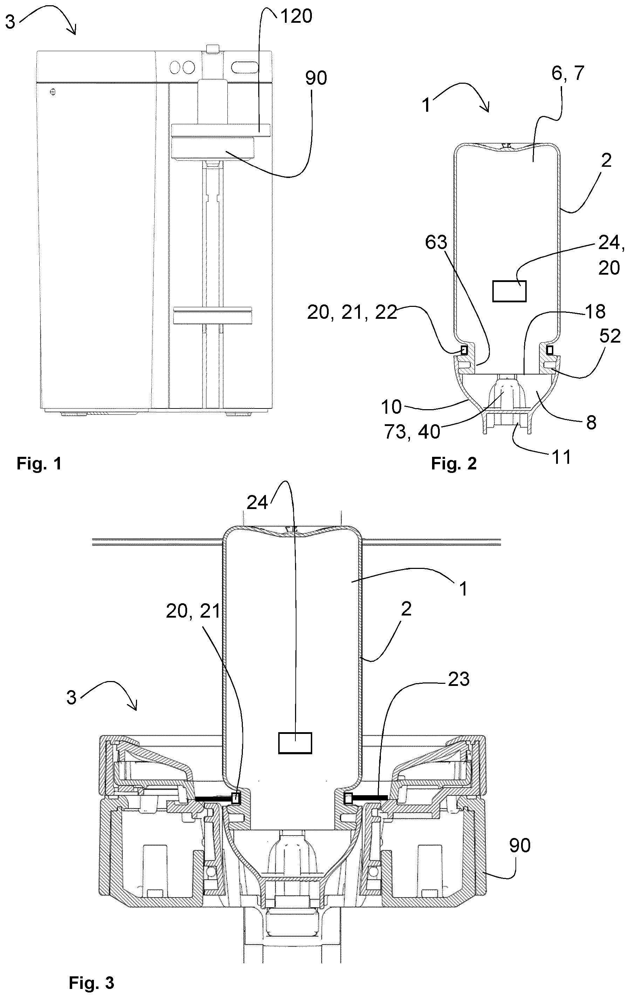

Die **Figur 1** zeigt eine schematische Darstellung einer Getränkezubereitungsmaschine 3 ohne eingesetzte Kartuschenaufnahme gemäß einer beispielhaften Ausführungsform der vorliegenden Erfindung.

Die Getränkezubereitungsmaschine 3 weist eine Halteeinheit 90 zur Aufnahme eines Kartuschensystems 10 auf (siehe Figur 2). Die Halteeinheit 90 weist einen Bedienhebel 120 zur manuellen Betätigung eines Auslösemechanismus zum Ausfahren eines Aufstechdorns 73 der Kartuschenaufnahme 10 zum Aufstechen eines Dichtmittels 18 auf. Wenn der Benutzer den Bedienhebel 120 rotiert wird der Auslösemechanismus zum Ausfahren des Aufstechdorns betätigt. Dabei wird durch den Auslösemechanismus insbesondere das Kartuschensystem 19 in bzw. mit der Halteeinheit 90 nach unten bewegt, so dass der Aufstechdorn 73 gegen ein feststehendes Auslöseelement der Halteeinheit 90 stößt und dadurch nach ob in Richtung der ausgefahrenen Position, in welecher das Dichtmittel 18 perforiert wird, überführt

In **Figur 2** ist eine schematische Darstellung des Kartuschensystems 1 gemäß einer beispielhaften Ausführungsform gezeigt, wobei diese lediglich zur Erläuterung der Funktion des Kartuschensystems 1 dient.

Das Kartuschensystem 1 umfasst eine Kartusche 2, die ein mit einer Getränkesubstanz 7 gefülltes Reservoir 6 und eine Kartuschenöffnung 63 umfasst. Die Kartuschenöffnung 63 ist im Ausgangszustand mit einem Dichtmittel 18 in Form einer Folie verschlossen. Im Bereich der Kartuschenöffnung 63 weist die Kartusche 2 einen Hals auf, welcher mit umlaufenden Halteflanschen 52 versehen ist.

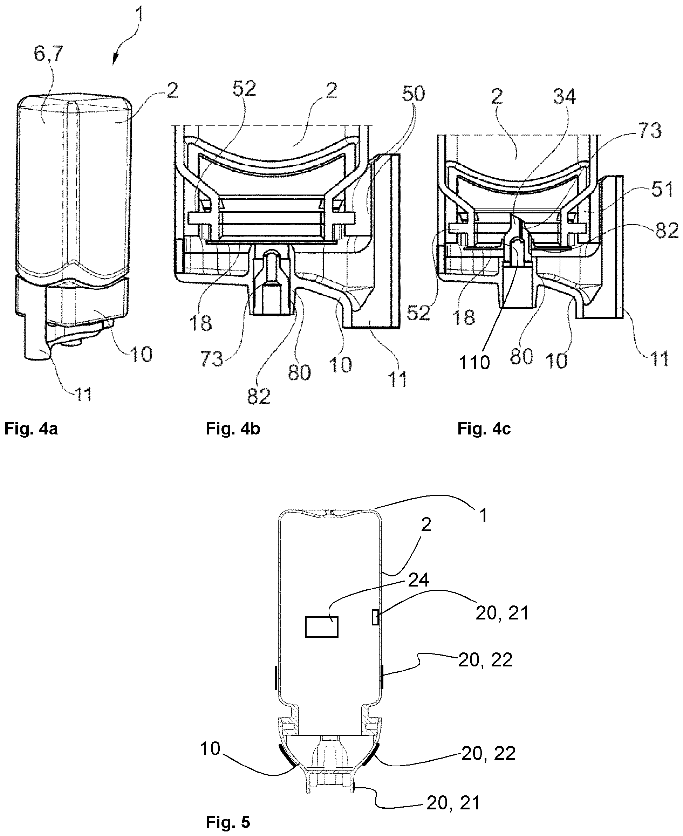

Das Kartuschensystem 1 umfasst ferner eine Kartuschenaufnahme 10, welche auf dem Hals sitzt und insbesondere mit den Halteflanschen 52 verbunden bzw. verrastet ist. Die Kartuschenaufnahme 10 weist eine Mischkammer 8, einen aus der Mischkammer 8 herausführenden Getränkeauslauf 11 für ein in der Mischkammer 8 erzeugtes Getränk sowie eine in die Mischkammer 8 mündende Fluidzuführung 12 (Siehe Figuren 4a bis 4c) auf, durch welche eine Flüssigkeit, insbesondere gekühltes und/oder karbonisiertes Wasser in die Mischkammer 8 eingeleitet wird.

Die Kartuschenaufnahme 10 weist ferner eine Dornführung 80 auf, in welcher ein Aufstechdorn 73 verschiebbar geführt ist. Der Aufstechdorn 73 ist in Figur 1 in einer eingefahrenen Position dargestellt.

Die Kartuschenaufnahme 10 weist in der in Figur 2 dargestellten beispielhaften Ausführungsform der vorliegenden Erfindung vorzugsweise ein Identifikationsmittel 20 auf. Das Identifikationsmittel 20 ist als Identifikationselement 21 ausgebildet, welches den Hals der Kartusche 2 umfasst. Das Identifikationselement 21 ist entweder ringförmig ausgebildet und umfasst den Hals vollständig, also entlang seines gesamten Umfangs, oder das Identifikationsmittel 21 ist c-förmig ausgebildet, so dass es den Hals nur teilweise umfasst, also sich nicht entlang des gesamten Umfangs des Halses erstreckt. Wenn das Identifikationsmittel 21 c-förmig ausgebildet ist, ist es vorzugsweise auf den Hals seitlich aufgeclipst. Wenn das Identifikationsmittel 21 ringförmig, also insbesondere auch hülsen- und/oder zylinderförmig ausgebildet ist, dass ist das Identifikationselement 20 mit dem Hals vorzugsweise kraft-, stoff- oder formschlüssig verbunden, insbesondere aufgeklebt, aufgeschweißt, aufgeschrumpft, aufgepresst, aufgeschoben, aufgesteckt oder dergleichen. Alternativ ist denkbar, dass das Identifikationsmittel 20 eine Beschichtung 22 umfasst, die als Lack oder Klebefilm oder Etikett auf den Hals aufgebracht, insbesondere auflackiert, aufgesprüht, aufgedampft oder aufgeklebt ist. Das Identifikationselement 21 umfasst vorzugsweise eine definierte elektrische Leitfähigkeit, welche mittels Kontaktelementen 23 der Halteeinheit 90 vermessen werden kann. Hierfür ist das Identifikationselement 20 optional zumindest teilweise aus Metall oder aus einem elektrisch leitenden Kunststoff, insbesondere einer elektrisch leitfähigen Kunststofffolie hergestellt.

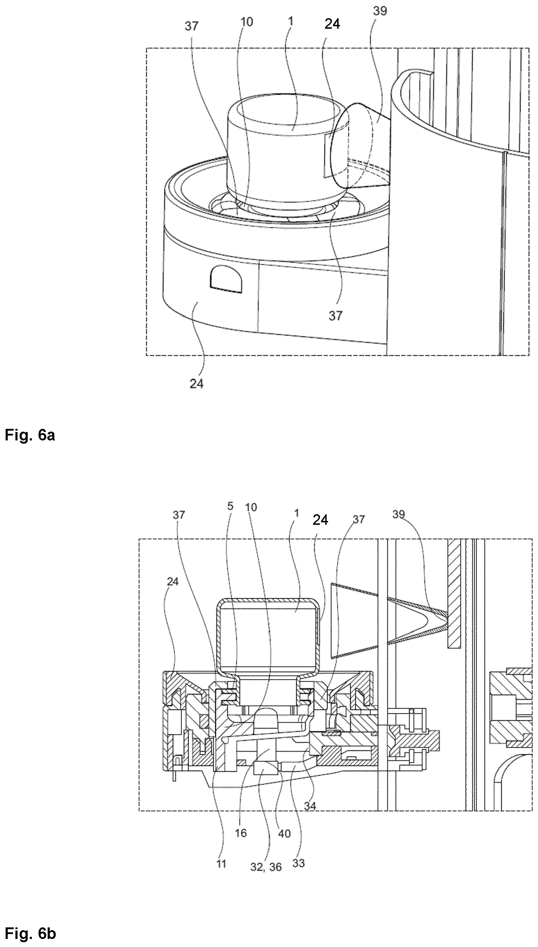

Alternativ weist die in Figur 2 dargestellte Kartuschenaufnahme nicht das Identifikationsmittel 20 in Form des Identifikationselements 21 am Hals der Kartusche 2 auf, sondern lediglich das Identifikationsmittel 20, 24 (später auch als Produktidentifikationskennung 24 bezeichnet) im Bereich der Kartuschenwandung 2'. Das Identifikationsmittel 20 ist dabei insbesondere ein auf die Kartusche 2 aufgeklebter, aufgedruckter oder anderweitig aufgebrachter Code, beispielsweise ein Marker, ein Muster, ein Schriftzug, ein Bild, ein Logo, ein eindimensionaler oder zweidimensionaler Barcode, ein Bitcode, ein QR-Code, ein Data-Matrix-Code, ein Farbcode und/oder ein Hologrammcode, der von einem optischen Kennungsdetektor 39 (siehe Figuren 6a, 6b) ausgelesen wird. Es könnte sich dabei alternativ auch um einen RFID-Chip oder ein Magnetelement handeln, der mit einem entsprechenden Kennungsdetektor ausgelesen wird.

Das Identifikationsmittel 20, 24 dient in jedem Fall dazu, die Systemzugehörigkeit des Kartuschensystems 1 innerhalb der Getränkezubereitungsmaschine 3 zu prüfen, also eine Identifikation des Kartuschensystems 1 zu ermöglichen. Denkbar ist auch, dass anhand des Identifikationsmittels 20, 24 der Kartuschensystemtyp und insbesondere Betriebsparameter der Getränkezubereitungsmaschine, wie beispielsweise Fördermenge, Förderzeit, Förderpausen, Temperatur, Karbonisierungsgrad und/oder Druck des zugeführten Fluids und/oder der zugeführten Druckluft identifiziert und insbesondere eingestellt werden.

In **Figur 3** ist eine schematische Darstellung der in Figur 1 illustrierten Getränkezubereitungsmaschine 3 dargestellt, in welche das in Figur 2 illustrierte Kartuschensystem 1 eingesetzt ist.

Die Halteeinheit 90, in welche die Kartuschenaufnahme 10 eingesetzt ist, umfasst ein Auslöselement, durch welches der Aufstechdorn 73 von seiner eingefahrenen Position in eine ausgefahrene Position überführbar ist.

Wenn der Aufstechdorn 73 in eine ausgefahrene Position überführt wird, perforiert er das Dichtelement 18, wodurch die Getränkesubstanz zwischen dem Dichtelement und der äußeren Oberfläche des Aufstechdorns 73 in die Mischkammer 8 gelangen kann. Der Aufstechdorn 73 weist ferner eine integrierte Druckluftverbindung in Form einer Druckluftleitung 40 auf, welche sich von einem äußeren Druckluftanschluss 42, durch welchen von außerhalb Druckluft in die Druckluftleitung 40 eingeblasen wird, zu einem dann innerhalb der Reservoirs befindlichen Druckluftauslass 43 am Ende der Aufstechdorns 73 erstreckt, wodurch die Druckluft in das Reservoir 6 eingeblasen wird. Die Getränkesubstanz wird sodann durch den Druck der Druckluft in die Mischkammer 8 überführt. In der Mischkammer 8 wird sodann durch Vermischung der Getränkesubstanz mit der durch die Fluidzuführung 12 zugeführten Flüssigkeit das Getränk erzeugt und durch den Getränkeauslauf 11 in Richtung beispielsweise eines Trinkgefäßes abgeführt.

Die Halteeinheit 90 steht in Fluidverbindung mit einer Druckluftquelle, um dem Druckluftanschluss 42 Druckluft zuzuführen. Ferner steht die Halteeinheit mit einer Fluidquelle in Fluidverbindung, um der Fluidzuführung das Fluid bzw. die oben genannte Flüssigkeit zuzuführen.

In der Ausführungsform, in der das Identifikationsmittel 20 als Identifikationselement 21 ausgebildet ist, umfasst ie Halteeinheit 90 optional ferner zwei Kontaktelemente 23, welche auf gegenüberliegenden Seiten der Kartusche angeordnet sind und jeweils einen unmittelbaren Kontakt mit dem am Hals angeordneten Identifikationsmittel 20 ausbilden. Über die Kontaktelemente 23 wird die elektrische Leitfähigkeit bzw. der elektrische Widerstand des Identifikationselemente 21 oder der Beschichtung 22 vermessen und anhand des gemessenen Wertes bestimmt, ob es sich bei dem in die Halteeinheit 90 eingesetzten Kartuschensystem 10 um eine systemkompatibles Kartuschensystem 10 handelt. Nur wenn diese Prüfung positiv verlaufen ist, wird das Verfahren zur Herstellung des Getränks durchgeführt bzw. fortgeführt. Andernfalls schaltet sich die Getränkezubereitungsmaschine insbesondere sofort ab.

Denkbar ist auch, dass anhand des gemessenen Leitfähigkeitwertes der Typ von Kartuschensystem 10 bestimmt wird. Anhand des Typs werden dann maschinenseitig die in einem Speicher hinterlegten für den Typ passenden Betriebsparameter geladen und das Getränkeherstellungsverfahren mit diesen Betriebsparametern durchgeführt.

Denkbar ist auch, dass maschinenseitig anhand des gemessenen Leitfähigkeitwertes erkannt wird, ob die Kartusche 2 alkoholhaltige Substanzen enthält. Wenn eine solche alkoholhaltige Substanz erkannt wird, wird seitens der Getränkezubereitungsmaschine ein zusätzlicher Verifikationsschritt durchgeführt, welcher dazu vorgesehen ist, eine Alters- und/oder Identifikationsfeststellung des Benutzers, beispielsweise anhand einer Kreditkarte, einem Fingerabdruckleser, einer Gesichtserkennung, eines Logins oder Passworts oder dergleichen, durchzuführen.

Denkbar ist optional ferner, dass die Kartusche 2 zusätzlich oder ausschließlich mit einer Produktidentifikationskennung 24 in Form eines Codes versehen ist, anhand derer der Typ der Kartusche 2 identifizierbar ist, wenn mittels des Identifikationsmittels 20, also insbesondere der Leitfähigkeitsmessung, die Systemzugehörigkeit der Kartusche 2 bereits verifiziert wurde, oder als alleiniges Identifikationsmittel 20 zur Erkennung der Systemzugehörigkeit. Die Produktidentifikationskennung 24 umfasst insbesondere einen auf die Außenwandung der Kartusche 2 oder der Kartuschenaufnahme 10 aufgebrachten Code, beispielsweise ein Marker, ein Muster, ein Schriftzug, ein Bild, ein Logo, ein eindimensionaler oder zweidimensionaler Barcode, ein Bitcode, ein QR-Code, ein Data-Matrix-Code, ein Farbcode und/oder ein Hologrammcode.

Das als Code ausgebildete Identifikationsmittel 20 bzw. die Produktidentifikationskennung 24 dient auch hier insbesondere dazu, die Systemzugehörigkeit des Kartuschensystems 1 zu verifizieren (eine Authentifizierung des Kartuschensystems im zweiten Verfahrensschritt) und optional die in der Kartusche 2 befindliche Getränkesubstanz 7 anzugeben. Denkbar ist, dass zusätzlich oder alternativ anhand der Produktidentifikationskennung 24 bzw. dem Code ferner Betriebsparameter der Getränkezubereitungsmaschine 3, wie beispielsweise Fördermenge, Förderleistung, Förderzeit, Förderpausen, Startzeitpunkt, Endzeitpunkt, Temperatur, Karbonisierungsgrad und/oder Druck des zugeführten Fluids, also insbesondere Steuerparameter der Fluidförderpumpe, und/oder der zugeführten Druckluft, also insbesondere Steuerparameter der Luftförderpumpe,eingestellt werden. Dies geschieht in und durch eine Auswerte- und Steuereinheit der Getränkezubereitungsmaschine 3. Denkbar ist, dass die Getränkezubereitungsmaschine 3 eine Vielzahl von vorgespeicherten Getränkeherstellungsprogrammen aufweist, die sich in den Betriebsparametern der Getränkezubereitungsmaschine 3 unterscheiden. Jedes Getränkeherstellungsprogramm ist mit einem oder mehreren Produktidentifikationskennungen 24 verknüpft. Die Produktidentifikationskennung 24 wird mit einem Kennungsdetektor 39 der Getränkezubereitungsmaschine 3, insbesondere einer optischen Kamera ausgelesen. Die Auswerte- und Steuereinheit wählt dann das der Produktidentifikationskennung 24 entsprechende Getränkeherstellungsprogramm aus. So können für jedes herzustellende Getränk optimale Betriebsparameter eingestellt werden.

Alternative weist die Kartusche 2 nur den vorstehend als Produktidentifikationskennung 24 beschriebenen Code auf, welcher sodann auch das Identifikationsmittel 20 darstellt. In diesem Fall weist die Kartusche insbesondere nicht das in Figur 2 illustrierte ringförmige Identifikationselement 21 auf.

In **Figuren 4a bis 4c** ist das Grundprinzip eines nicht erfindungsgemässen Verfahrens zur Herstellung eines Getränks mit dem Kartuschensystem 1 eingesetzt in eine Getränkezubereitungsmaschine 3 gezeigt, um nochmal das allgemeine Funktionsprinzip der eigentlichen Getränkeherstellung des erfindungsgemäßen Systems zu illustrieren.

Das vorliegende System umfasst die Getränkezubereitungsmaschine 3 (nur schematisch illustriert), in welche austauschbare Kartuschensysteme 1 einsetzbar sind. Jedes Kartuschensystem 1 weist eine Kartusche 2, die mit einer bestimmten Getränkesubstanz 7 gefüllt ist, und eine mit der Kartusche 2 verbundene Kartuschenaufnahme 10 auf. Innerhalb der Getränkezubereitungsmaschine 3 wird mit Hilfe der Getränkesubstanz 7 und einer zusätzlichen Wasserquelle, im Folgenden als Fluidquelle 41 bezeichnet, ein entsprechendes Getränk erzeugt. Die Kartusche 2 ist dabei vorzugsweise mit einer vorportionierten Menge an Getränkesubstanz 7, die zur Erzeugung einer gezielten Trinkportion, beispielsweise eine Trinkglasfüllung des gewünschten Getränks, notwendig ist, befüllt. Es stehen insbesondere eine Mehrzahl unterschiedlicher Kartuschensysteme 1 zur Verfügung, deren Kartuschen 2 bzw. Reservoirs 6 zur Erzeugung verschiedener Getränke mit unterschiedlichen Getränkesubstanzen 7 befüllt sind. Wenn der Anwender des Systems 1 ein bestimmtes Getränk trinken möchte, braucht er lediglich aus der Mehrzahl der unterschiedlichen Kartuschensysteme 1 dasjenige Kartuschensystem 1, welche die entsprechende Getränkesubstanz 7 zur Erzeugung des gewünschten Getränks enthält, auswählen, in eine Halteeinheit 90 der Getränkezubereitungsmaschine 3 einsetzen und den Getränkeherstellungsprozess an der Getränkezubereitungsmaschine 3 ggf. starten, beispielsweise durch Drücken eines Startknopfs, entsprechendes Berühren eines berührungssensitiven Displays, durch Gestik- oder Sprachsteuerung oder mittels einer geeigneten Applikation auf einem Mobiltelefon. Denkbar ist auch, dass der Getränkeherstellungsprozess automatisch startet, wenn das Einlegen eines neuen Kartuschensystems 1 in die Halteeinheit 90 erkannt wird. In jedem der vorgenannten Fälle wird das gewünschte Getränk sodann automatisch erzeugt, in ein Trinkgefäß geleitet und dem Anwender somit bereitgestellt. Anschließend wird das verbrauchte Kartuschensystem 1 entfernt und entsorgt. Die Getränkezubereitungsmaschine 3 ist nun wieder bereit, um mit einem beliebigen neuen Kartuschensystem 1 befüllt zu werden, um ein weiteres Getränk zu erzeugen.

Die Getränkesubstanz 7 umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-)Getränke.

Das Kartuschensystem 1 umfasst eine Kartusche 2 in Form eines zylinderförmigen Behälters mit abgerundeten Ecken. Der Behälter ist hohl und beinhaltet somit ein Reservoir 6 für die Getränkesubstanz 7. Die Kartusche 2 ist insbesondere aus Kunststoff gefertigt und durch ein Blas-Spritzform-Verfahren hergestellt. Die Kartusche 2 weist ferner eine Kartuschenöffnung 63 auf, durch welche das Reservoir 6 mit der flüssigen Getränkesubstanz 7 befüllt wird. Der Boden des Reservoirs 6 ist beim Beispiel trichterförmig ausgebildet, wobei im Zentrum des trichterförmigen Bodens die Kartuschenöffnung 63 angeordnet ist. Die Kartusche 2 ist mit einer erfindungsgemäßen Kartuschenaufnahme 10 fest oder reversibel verbunden. Die Kartuschenaufnahme 10 wird insbesondere nach dem Befüllen der Kartusche 2 im Bereich der Kartuschenöffnung 63 auf die Kartusche 2 mittels einer Rastverbindung 50 verbunden. Die Kartuschenaufnahme 10 weist hierfür beispielsweise seitliche Rastelemente 51 in Form von elastischen Halteärmchen oder eine umlaufende Rastleiste 51 (Figur 5) auf, welche einen oder zwei im Bereich der Kartuschenöffnung 63 angeordnete umlaufende Halteflansche 52 der Kartusche 2 umgreift. Die Kartuschenaufnahme 10 wird nach dem Befüllen der Kartusche 2 auf die Kartusche 2 geclipst.

Die Kartuschenaufnahme 10 weist eine Mischkammer 8 auf, welche während des Getränkeherstellungsprozesses in Fluidverbindung mit dem Reservoir 6 steht, so dass mit Hilfe einer Kartuschenentladeeinrichtung 34 der Kartuschenaufnahme 10 die Getränkesubstanz 7 zumindest teilweise aus dem Reservoir 6 in die Mischkammer 8 überführt werden kann. Die Kartuschenentladeeinrichtung 34 umfasst zu diesem Zweck eine Druckluftleitung 40. Ein Ende der Druckluftleitung 40 ist mit einem Druckluftanschluss 42 verbunden, der mit einer Druckluftquelle 41 der Getränkezubereitungsmaschine 3 verbunden werden kann, um Druckluft in die Druckluftleitung 40 einzuleiten, während das andere Ende in einen Druckluftauslass 43 mündet, der in Richtung des Reservoirs 6 geöffnet ist und Druckluft in das Reservoir 6 einleitet. Das Einleiten der Druckluft bewirkt, dass die Getränkesubstanz 7 in die Mischkammer 8 gedrückt wird. Die Druckluftquelle 41 umfasst ferner vorzugsweise eine Luftförderpumpe, die während des Getränkeherstellungsprozesses eingeschaltet wird und Umgebungsluft in die Druckluftleitung 40 in Richtung des Reservoirs 6 pumpt.

In die Mischkammer 8 mündet ferner eine Fluidzuführung 12 der Kartuschenaufnahme 10, welche durch eine Fluidquelle 91 der Getränkezubereitungsmaschine 3 gespeist wird. Denkbar ist, dass die Fluidzuführung 12 eine Schnellkupplung aufweist, mit welcher die Fluidzuführung 12 an die Fluidquelle 91 der Getränkezubereitungsmaschine 3 angeschlossen werden kann. Die Fluidquelle 91 umfasst ferner vorzugsweise eine Fluidförderpumpe, die während des Getränkeherstellungsprozesses eingeschaltet wird. Die Schnellkupplung kann beispielsweise derart ausgebildet sein, dass beim Einsetzen des Kartuschensystems 1 in die Halteeinheit 90 automatisch eine Fluidverbindung zwischen der Fluidquelle 91 und der Mischkammer 8 über die Fluidzuführung 12 hergestellt wird. Während des Getränkeherstellungsprozesses gelangt über diese Fluidverbindung Fluid, insbesondere gekühltes und karbonisiertes Trinkwasser, von der Fluidzuführung 12 in die Mischkammer 8. Ferner gelangt während des Getränkeherstellungsprozesses Getränkesubstanz 7 von dem Reservoir 6 in die Mischkammer 8, wie vorstehend beschrieben. Durch Vermischung der Getränkesubstanz 7 mit dem Fluid in der Mischkammer 8 bildet sich das Getränk, welches die Mischkammer 8 sodann durch einen Getränkeauslauf 11 verlässt.

Die Kartuschenaufnahme 10 weist den Getränkeauslauf 11 auf, durch welchen das innerhalb der Mischkammer 8 erzeugte Getränk die Mischkammer 8 verlässt und insbesondere direkt in das Trinkgefäß (nicht abgebildet) geleitet wird, d.h. ohne dass Teile der Getränkezubereitungsmaschine 3 in Kontakt mit dem Getränk gelangen. Auf diese Weise wird Rückkontamination der Getränkezubereitungsmaschine 3 verhindert. Das Trinkgefäß wird insbesondere direkt unterhalb des Getränkeauslaufs 11 angeordnet.

Nach Beendigung des Getränkeherstellungsprozesses wird das Kartuschensystem 1 aus der Halteeinheit 90 entnommen, so dass die Getränkeherstellungsmaschine 3 mit einem neuen und unverbrauchten Kartuschensystem 1 bestückt werden kann. Die Kartuschenaufnahme 10 kann wiederverwendet werden, indem es von der benutzten Kartusche 2 abgetrennt und auf eine neue Kartusche 2 geclipst wird.

Die Kartuschenaufnahme 10 weist eine Dornführung 80 auf, in welcher ein Aufstechdorn 73 verschiebbar gelagert ist. Das Dichtelement 18 wird durch eine Überführung des verschiebbaren Aufstechdorns 73 zwischen einer eingefahrenen Position, in welcher der Aufstechdorn 73 von dem Dichtelement 18 beabstandet ist (Vgl. Figur 4b), und einer ausgefahrenen Position, in welcher der Aufstechdorn 73 das Dichtelement 18 durchsticht (Vgl. Figur 4c) und bis in die Kartuschenöffnung 63 bzw. in das Reservoir 6 ragt, perforiert.

Die Außenwandung des Aufstechdorns 73 ist mit der Mehrzahl von Seitenkanälen zum Leiten der Getränkesubstanz 7 vom Reservoir 6 in Richtung der Mischkammer 8, wenn das Dichtelement 18 durchstochen ist, versehen. Die Seitenkanäle sind in Form von parallel zueinander verlaufenden einseitig offenen Nuten ausgebildet. Nach dem Durchstechen des Dichtelements 18 gelangen die Seitenkanäle in Fluidverbindung mit dem Reservoir 6, so dass die Getränkesubstanz 7 die Ränder des durchstochenen Dichtelements 18 in Richtung der Mischkammer 8 umfließen kann.

Der Querschnitt der Seitenkanäle und/oder die Anzahl der Seitenkanäle ist dabei vorzugsweise an die Viskosität der Getränkesubstanz 7 angepasst ist, so dass die Seitenkanäle den Fluss der Getränkesubstanz 7 in Richtung Mischkammer 8 kontrollieren bzw. begrenzen. Bei einer hohen Viskosität werden mehrere Seitenkanäle und/oder Seitenkanäle mit größerem Querschnitt verwendet, während bei einer niedrigeren Viskosität weniger Seitenkanäle und/oder Seitenkanäle mit geringerem Querschnitt vorgesehen sind.

In den Aufstechdorn 73 ist ferner die Druckluftleitung 40 integriert, welche als Kartuschenentladeeinrichtung 34 fungiert. Die Druckluftleitung 40 mündet durch eine feststehende Druckluftspitze am Ende des Aufstechdorns 73 in die Kartuschenöffnung 63, wenn sich der Aufstechdorn 73 in der ausgefahrenen Position befindet. Die Druckluftspitze ragt also automatisch in die Kartuschenöffnung 63, wenn der Aufstechdorn 73 in die ausgefahrene Position verschoben wurde und infolgedessen das Dichtelement 18 durchstochen hat.

An einer dem Reservoir 6 insbesondere abgewandten Seite des Aufstechdorns 73 ist der Druckluftanschluss 42 ausgebildet, der somit von außerhalb der Kartuschenaufnahme 10 zugänglich und an die Druckluftquelle 41 der Getränkezubereitungsmaschine 3 anschließbar ist. Vorzugsweise wird der Aufstechdorn 73 beim oder nach dem Einsetzen des Kartuschensystems 10 in die Getränkezubereitungsmaschine 3 oder nach dem Starten des Getränkeherstellungsprozesses von der eingefahrenen Position in die ausgefahrene Position überführt, vorzugsweise durch ein feststehendes Auslöseelement der Halteeinheit 90, gegen welches der Aufstechdorn 73, insbesondere beim Absenken der Kartusche während eines Handhabungsschrittes (siehe unten)gedrückt wird.

Es ist vorzugsweise vorgesehen, dass sowohl die Fluidquelle 91 als auch die Druckluftquelle 41 direkt an die Fluidzuführung 12 bzw. den Druckluftanschluss 42 angekoppelt werden, sobald das Kartuschensystem 1 in die Getränkezubereitungsmaschine 3 eingesetzt wird oder ein Getränkeherstellungsprozess gestartet wird und insbesondere bevor das Dichtelement 18 durchstochen wird. Denkbar wäre, dass auf diese Weise eine Rückkontamination in Richtung der Getränkezubereitungsmaschine 3 wirksam vermieden, weil die Fluidzuführung 12 und die Kartuschenentladeeinrichtung 34 optional sofort beim Einsetzen des Kartuschensystems 1 unter Überdruck stehen und somit verhindert wird, dass Getränkesubstanz 7 in Richtung der Fluidquelle 91 bzw. Druckluftquelle 41 wandert. Die Getränkesubstanz 7 kann sich ausgehend vom Reservoir 6 somit lediglich in Richtung der Mischkammer 8 bewegen, sobald das Dichtelement 18 geöffnet wird. Vorzugsweise wird der Druck in der Fluidleitung aber erst durch Einschalten der Fluidförderpumpe und der Druck in der Druckluftleitung erst durch Einschalten der Luftförderpumpe aufgebaut, was erst nach einer erfolgreichen Authentifizierung des Kartuschensystems anhand des Identifikationsmittels durch die Auswerte- und Steuereinheit erfolgt.

Die Halteeinheit 90 weist insbesondere einen Befestigungsflansch (siehe Figur 3) auf, welcher die Kartuschenaufnahme 10 nach dem Einsetzen in die Halteeinheit 90 formschlüssig umgreift. Die Halteeinheit 90 ist vorzugsweise manuell bedienbar, beispielsweise über einen Bedienhebel 120. Wenn ein Benutzer den Bedienhebel 120 betätigt, wird die Kartuschenaufnahme 10 relativ zur Getränkezubereitungsmaschine 3 derart bewegt, dass das äußere Ende des Aufstechdorns 73 gegen ein feststehendes Auslöseelement (nicht dargestellt) der Halteeinheit 90 gedrückt wird, wodurch sich der Aufstechdorn 73 von der eingefahrenen Position in die ausgefahrene Position bewegt und das Dichtelement perforiert.

Die Kartuschenaufnahme 10 weist beidseitig eine zumindest teilweise umlaufende Rastleisteauf, mit welcher die Kartuschenaufname 10 auf die Halteflansche 52 der Kartusche 2 aufgeclipst wird. Ferner weist die Kartuschenaufnahme 10 eine Mischkammer 8 auf, in welche an ihrer rückwärtigen Seite die Fluidzuführung 12 in Form einer einfachen Durchgangsöffnung in der Wandung der Kartuschenaufnahme 10 ausgebildet ist. An der Vorderseite ist im Boden der Mischkammer 8 der Getränkeauslauf 11 ausgebildet. Der Boden der Mischkammer 8 bildet in Richtung des Getränkeauslaufs 11 eine sich stetig vertiefende Vertiefung, so dass nach Beendigung des Getränkeherstellungsprozesses keine Flüssigkeitsrückstände in der Mischkammer 8 verbleiben. Nahezu mittig innerhalb der Mischkammer 8 ist in der Figur 5 zudem die Dornführung 80 zu sehen.

Die Dornführung 80 umfasst ein Führungsteil mit einem innenliegenden Führungskanal 110, in welchem der Aufstechdorns 73 verschiebbar aufgenommen ist. Der Führungskanal 110 ist im Wesentlichen zylinderförmig ausgebildet ist und steht nahezu senkrecht vom Boden der Mischkammer 8 in Richtung der Kartusche 2 hervor. An einem der Kartusche 2 zugewandten Ende des Führungsteils ist ein umlaufender Anschlag mit verringertem Durchmesser ausgebildet, an welchem der umlaufende Absatz des Aufstechdorns 73 anschlägt, wenn der Aufstechdorn 73 in der ausgefahrenen Position ankommt. Der Anschlag begrenzt somit die Bewegung des Aufstechdorns 73 in Richtung des Reservoirs 6. Auf dem Boden der Mischkammer 8 sind optional Mischstrukturen angeordnet.

**In** **Figur** 5 zeigt eine schematische Darstellung des Kartuschensystems 1 gemäß weiterer beispielhafter Ausführungsformen der vorliegenden Erfindung. Das abgebildete Kartuschensystem 1 entspricht dem in Figuren 2 und 3 gezeigten Kartuschensystem 1, wobei lediglich Alternativbeispiele als Identifikationsmittel 20 gezeigt sind. Ansonsten gelten sämtliche vorstehende Ausführungen analog.

Das Identifikationsmittel 20 kann gemäß Figur 5 also als umlaufende Beschichtung auf der Außenwandung der Kartusche 2 oder der Kartuschenaufnahme 10 ausgebildet sein. Ferner kann das Identifikationsmittel 20 als nicht-umlaufende Beschichtung auf der Außenwandung der Kartuschenaufnahme 10 im Bereich des Getränkeauslaufs 11 vorgesehen sein. Die Identifikationsmittel 20 können über entsprechende angepasste Kontaktelemente 23 ausgelesen werden.

Ferner kann das Identifikationsmittel 20 in Form eines innerhalb der Reservoirs 6 angeordneten Identifikationselement 21 ausgebildet sein. Denkbar ist, dass das Identifikationselement 21 dort frei beweglich oder an der Innenwandung des Kartusche 2 befestigt ist. Das Auslesen dieses Identifikationselements 21 kann sodann optisch (bei einer transparenten Getränkesubstanz 7 und/oder Kartuschenwandung) oder elektromagnetisch (wenn das Identifikationselement 21 beispielsweise eine RFID-Chip ist) bzw. rein magnetisch (wenn das Identifikationselement 21 ein Permanentmagnet oder ein magnetisches Material umfasst) erfolgen.

In **Figuren 6a und 6b** ist die Auslesung des Identifikationsmittels 20 bzw. der Produktidentifikationskennung 24 des erfindungsgemäßen Systems nochmal im Detail dargestellt. Die Kartusche 1 weist in ihrem dem Gehäuse der Getränkezubereitungsmaschine 3 zugewandten abgeflachten Bereich 38 das Identifikationsmittel 20 auf (auch als Produktidentifikationskennung 24 bezeichnet). Das Identifikationsmittel 20 (bzw. die Produktidentifikationskennung 24) umfasst dabei vorzugsweise einen Code, beispielsweise ein Marker, ein Muster, ein Schriftzug, ein Bild, ein Logo, ein eindimensionaler oder zweidimensionaler Barcode, ein Bitcode, ein QR-Code, ein Data-Matrix-Code, ein Farbcode und/oder ein Hologrammcode, in welchen Informationen über dias Kartuschensystem 1 und/oder diein dem Reservoir 6 vorhandene Getränkesubstanz eingebettet sind. An der gegenüberliegenden Seite ist am Gehäuse der Getränkezubereitungsmaschine 3 ein Kennungsdetektor 39 in Form einer optischen Kamera, insbesondere CCD-Kamera angeordnet.

Der Code wird von der optischen Kamera erfasst und mittels einer Auswerteeinheit der Getränkezubereitungsmaschine 3 ausgewertet. Auf diese Weise wird seitens der Getränkezubereitungsmaschine 3 erkannt bzw. verifiziert, ob es sich um ein authentifiziertes (also systemeigenes) Kartuschensystem 1 handelt und/oder um welche Art von Kartusche 1 und/oder Getränkesubstanz 7 es sich bei dem in die Halterung 24 eingesetzten Kartuschensystem 1 handelt.

Anhand dieser Informationen können aus einem internen Speicher der Getränkezubereitungsmaschine 3 ggf. Informationen über die Zubereitung des Getränks mit Hilfe der in der Kartusche 1 befindlichen Getränkesubstanz geladen werden. Insbesondere werden hierdurch Sollwerte für den zeitlichen und absoluten Verlauf des Volumenstroms, der Temperatur, des Drucks und/oder der Carbonisierung des eingespeisten Wassers oder des zeitlichen und absoluten Verlaufs des Volumenstroms und/oder des Drucks der eingespeisten Druckluft vorgegeben. Denkbar ist auch, dass das Verhältnis zwischen dem Volumenstrom des Verdünnungsmittels und dem Volumenstrom der Druckluft in Abhängigkeit der verifizierten Produktidentifikationskennung 24 gesteuert wird, um beim hergestellten Getränk für den jeweiligen Kartuschentyp das optimale Ergebnis hinsichtlich Aussehen und Geschmack zu erzielen. Alternativ ist auch denkbar, dass die vorgennanten Betriebsparameter in den Code eingebettet sind und dem Code direkt entnommen werden, um den Getränkeherstellungsprozess entsprechend zu steuern.

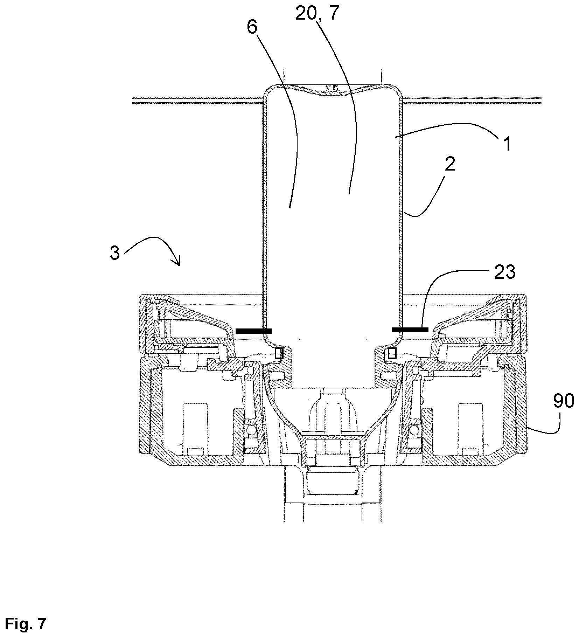

**In** **Figur** 7 ist eine schematische Darstellung der in Figur 1 illustrierten Getränkezubereitungsmaschine 3 dargestellt, in welche das in Figur 2 illustrierte Kartuschensystem 1 eingesetzt ist. Die Darstellung entspricht der in Figur 3 illustrierten Ausführungsform, wobei die Identifikationsmittel 20 nunmehr in die Getränkesubstanz 7 integriert ist, welche sich im Reservoir 6 befindet. Die Kontaktelemente 23 durchstoßen die Kartuschenwandung im Bereich des Reservoirs, um in Kontakt mit der Getränkesubstanz 7 zu gelangen. Über die Kontaktelemente 23 wird dann die elektrische Leitfähigkeit der Getränkesubstanz 7 vermessen und somit das Identifikationsmittel 20 ausgewertet. Anhand der gemessenen elektrischen Leitfähigkeit wird anschließend der Kartuschentyp bestimmt und das entsprechende Getränkezubereitungsprogramm gestartet.

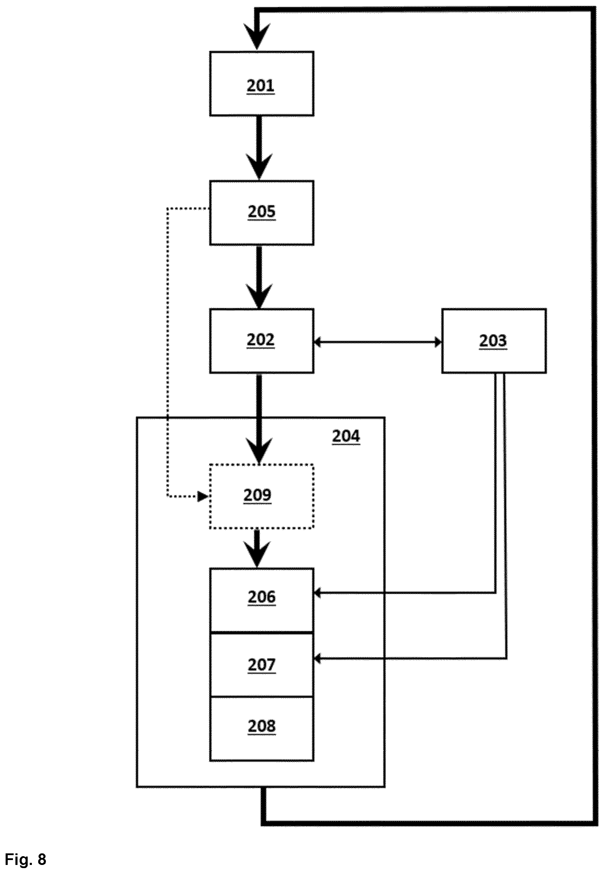

In Figur 8 ist eine schematische Darstellung der einzelnen Schritte eines beispielhaften Verfahrens zur Herstellung eines Getränks, insbesondere mit einer Getränkezubereitungsmaschine und einem System wie sie anhand der Figuren 1, 2, 3, 4a bis 4c, 6a, 6b erläutert wurden offenbart.

Das Kartuschensystem 1 ist dabei beispielshaft mit einem Identifikationsmittel 20 nur in Form eines Codes, beispielsweise ein Marker, ein Muster, ein Schriftzug, ein Bild, ein Logo, ein eindimensionaler oder zweidimensionaler Barcode, ein Bitcode, ein QR-Code, ein Data-Matrix-Code, ein Farbcode und/oder ein Hologrammcode, oder einem Identifikationsmittel 20 in Form eines Identifikationselements 21 ausgestattet.

Im ersten Verfahrensschritt 201 wird das Kartuschensystem 1 von einem Benutzer in die Getränkezubereitungsmaschine 3 manuell eingesetzt, wobei die Kartuschenaufnahme 10 in die entsprechende Halteeinheit 90 der Getränkezubereitungsmaschine eingesetzt wird.

In einem nachfolgenden Handhabungsschritt 205 wird von dem Benutzer der Bedienhebel 120 betätigt, wodurch die Auslösemechanik betätigt wird und ein Befestigungsflansch der Halteeinheit 90 die Kartuschenaufnahme 10 kraft- und/oder formschlüssig umgreift. Das Kartuschensystem 1 wird dabei transversal relativ zur Halteeinheit 90 bewegt, wodurch der Aufstechdorn 73 der Kartuschenaufnahme 10 relativ zu einem feststehenden Auslöseelement der Halteeinheit b90 bewegt wird. Der Aufstechdorn 73 wird dadurch von seiner eingefahrenen Position in seine ausgefahrene Position verschoben und durchsticht dabei das Dichtelement 18 und ragt in das Reservoir 6 vor. Ferner wird im Handhabungsschritt 205 dadurch eine Druckluftverbindung zwischen der Druckluftquelle der Getränkezubereitungsmaschine 3 und des Druckluftanschlusses der Kartuschenaufnahme 10 hergestellt (das bedeutet nicht, dass bereits Druckluft in das Reservoir 6 eingeblasen wird, sondern nur, dass die entsprechenden Leitungen oder Anschlüsse miteinander verbunden werden).

Ferner wird im Handhabungsschritt 205 zusätzlich eine Fluidverbindung zwischen einer Fluidquelle der Getränkezubereitungsmaschine 3 und der Fluidzuführung der Kartuschenaufnahme 10 hergestellt (das bedeutet nicht, dass bereits Fluid in Richtung Mischkammer 8 strömt, sondern nur, dass die entsprechenden Leitungen oder Anschlüsse miteinander verbunden werden).

Alternativ ist denkbar, dass die Aktivierung der Auslösemechanik nicht manuell, sondern motorgetrieben durch einen entsprechenden Aktuator, der durch die Kontrolleinheit gesteuert wird, erfolgt.

Anschließend wird in einem zweiten Verfahrensschritt 202 der Code auf der Kartusche 2 von dem Kennungsdetektor 39 optisch ausgelesen oder alternativ das Identifikationsmittel 21 von dem Kontaktelement zum Ausmessen des Identifikationsmittels 21 kontaktiert.

Eine Auswerte- und Steuereinheit (auch als Kontrolleinheit bezeichnet) 203 der Getränkezubereitungsmaschine 3 prüft im zweiten Verfahrensschritt 202 anhand des detektierten Codes oder ausgelesenen Identifikationselements 21, ob es sich bei der eingesetzte Kartuschensystem 1 um ein systemeigenes und bekanntes, also authentifiziertes Kartuschensystem 1 handelt. Zu diesem Zweck wird der ausgelesene Code bzw. das Identifikationsmittel 20 mit einer entsprechenden Referenz verglichen oder geprüft, ob Betriebsparameter aus dem ausgelesenen Code bzw. aus dem Identifikationsmittel 20 extrahierbar sind oder zuordenbar sind. Wenn diese Prüfung positiv verläuft, gilt das Kartuschensystem 1 als authentifiziert.

Wenn im zweiten Verfahrensschritt ein authentifiziertes Kartuschensystem 1 erkannt wurde, wird in einem dritten Verfahrensschritt 204 der Getränkeherstellungsprozess gestartet.

Der Getränkeherstellungsprozess umfasst einen ersten Zubereitungsschritt 206, in welchem zunächst eine Fluidförderpumpe der Getränkeherstellungsmaschine durch die Auswerte- und Steuereinheit 203 gestartet wird, welche das Fluid aus einem Fluidtank (insbesondere ein herausnehmbarer Wassertank) durch einen Wärmetauscher zur Kühlung des Fluids und durch einen Durchlaufkarbonisierer zur Karbonisierung des gekühlten Fluids in die Mischkammer der Kartuschenaufnahme 10 gefördert wird.

Insbesondere nach dem Abwarten einer Zeitspanne zwischen 1 Millisekunde und 2 Sekunden, bevorzugt zwischen 100 Millisekunden und 1,5 Sekunden und besonders bevorzugt von 500 Millisekunden bis 1 Sekunde nach dem Einschalten der Fluidförderpumpe wird in einem zweiten Zubereitungsschritt 207 die Luftförderpumpe der Getränkezubereitungsmaschine 3 durch die Auswerte- und Steuereinheit 203 eingeschaltet, welche Umgebungsluft durch einen Lufteinlass ansaugt und durch die Druckluftleitung 40 als Druckluft in das Reservoir 6 pumpt.

Denkbar ist, dass Startzeitpunkt, Stoppzeitpunkt, Laufzeit und/oder Förderleistung der Fluidförderpumpe und/oder der Luftförderpumpe und/oder die abzuwartende Zeitspanne zwischen dem Start der Fluidförderpumpe und der Luftförderpumpe als Betriebsparameter aus dem Code bzw. dem Identifikationsmittel 20 ausgelesen wird und die Auswerte- und Steuereinheit 203 den ersten und zweiten Zubereitungsschritt 206 und 207 entsprechend steuert..

Durch das Einspeisen der Druckluft in das Reservoir 6 wird in einem dritten Zubereitungsschritt 208 sodann die Getränkesubstanz 7 aus dem Reservoir 6 in die Mischkammer 8 überführt und dort mit dem Fluid vermischt, wodurch in der Mischkammer das Getränk gebildet wird, welches aus der Mischkammer 8 über den Getränkeauslauf 11 in ein Trinkgefäß abgegeben wird.

Alternativ zur vorstehend beschriebenen Abfolge kann der Handhabungsschritt 205 anstelle zwischen dem ersten und dem zweiten Verfahrensschritt 201 und 202 als nullter Zubereitungsschritt 209 als Teil des Getränkezubereitungsprozesses durchgeführt werden. Dies hat den Vorteil, dass ein Öffnen des Kartuschensystems 1 mittels des Auslöseelements erst dann erfolgt, wenn das Kartuschensystem 1 anhand des Codes bzw. Identifikationsmittels 20 von der Auswerte- und Steuereinheit 203 authentifiziert wurde.

Nachdem der dritten Zubereitungsschritt 208 abgeschlossen wurde, wird die Luftförderpumpe und die Fluidförderpumpe gleichzeitig oder nacheinander gestoppt, wobei vorzugsweise zuerst die Luftförderpumpe und anschließend die Fluidförderpumpe abgeschaltet werden. Danach kann die Auslösemechanik manuell über den Bedienhebel oder motorisch gelöst bzw. in seine Ausgangsstellung zurückgefahren werden, so dass das verwendete Kapselsystem 1 aus der Halteeinheit 90 entnommen werden kann. Nun ist die Getränkezubereitungsmaschine 3 für einen neuen Zyklus bereit, der wiederum mit dem ersten Verfahrensschritt 201 startet.

### Bezugszeichenliste

- 1: Kartuschensystem
- 2: Kartusche
- 3: Getränkezubereitungsmaschine
- 6: Reservoir
- 7: Getränkesubstanz
- 8: Mischkammer
- 10: Kartuschenaufnahme
- 11: Getränkeauslauf
- 12: Fluidzuführung
- 18: Dichtelement
- 20, 24: Identifikationsmittel
- 21: Identifikationselement
- 22: Beschichtung
- 23: Kontaktelemente
- 24: Produktidentifikationskennung
- 34: Kartuschenentladeeinrichtung
- 39: Kennungsdetektor
- 40: Druckluftleitung
- 42: Druckluftanschluss
- 43: Druckluftauslass
- 52: Halteflansch
- 63: Kartuschenöffnung
- 73: Aufstechdorn
- 80: Dornführung
- 90: Halteeinheit
- 110: Führungskanal
- 120: Bedienhebel

## Patentansprüche

1. Kartuschensystem (1) zur Herstellung eines Getränks, wobei das Kartuschensystem (1) in eine Getränkezubereitungsmaschine (3) einsetzbar ist, wobei das Kartuschensystem (1) eine Kartusche (2), die ein mit einer Getränkesubstanz (7) gefülltes Reservoir (6) umfasst, und eine mit der Kartusche (2) verbundene Kartuschenaufnahme (10) aufweist, wobei die Kartuschenaufnahme (10) eine mit dem Reservoir (6) in Fluidverbindung bringbare Mischkammer (8) und eine in die Mischkammer (8) mündende Fluidzuführung (12) aufweist, wobei das Kartuschensystem (1) ein Identifikationsmittel (20) zur Identifikation des Kartuschensystems (1) in der Getränkezubereitungsmaschine (3) umfasst, **dadurch gekennzeichnet, dass** das Identifikationselement (21) innerhalb des Reservoirs (6) und/oder der Mischkammer (8) angeordnet ist.

2. Kartuschensystem (1) nach Anspruch 1, wobei das Identifikationsmittel (20) eine Beschichtung (22), insbesondere in Form eines Lackes, eines Aufdruckes oder einer Folie, auf einer inneren Oberfläche der Kartusche (2) und/oder der Kartuschenaufnahme (10) umfasst.

3. Kartuschensystem (1) nach einem der vorhergehenden Ansprüche, wobei das Identifikationsmittel (20) entlang einer Längsachse des Kartuschensystems (1) zwischen dem Reservoir (6) und der Mischkammer (8) angeordnet ist.

4. Kartuschensystem (1) nach einem der vorhergehenden Ansprüche, wobei das Identifikationselement (22) mit der Kartusche (2), der Kartuschenaufnahme (10) und/oder dem Hals kraft-, stoff- und/oder formschlüssig verbunden, insbesondere verklebt, verschweißt, verrastet und/oder verpresst ist.

5. Kartuschensystem (1) nach einem der vorhergehenden Ansprüche, wobei das Identifikationselement (22) einstückig mit der Kartusche (2), der Kartuschenaufnahme (10) und/oder dem Hals verbunden ist und insbesondere in die Kartusche (2), die Kartuschenaufnahme (10) und/oder den Hals integriert ist.

6. Kartuschensystem (1) nach einem der vorhergehenden Ansprüche, wobei das Identifikationsmittel ein auf der Innenseite einer zumindest teilweise optisch transparenten Wandung des Reservoirs oder der Mischkammer angeordneter optisch auslesbarer Code, insbesondere ein ein- oder mehrdimensionaler Barcode, ein Muster oder ein Hologramm ist.

7. Kartuschensystem (1) nach einem der vorhergehenden Ansprüche, wobei das Getränkesubstrat als Identifikationsmittel fungiert.

8. Kartuschensystem (1) nach einem der vorhergehenden Ansprüche, wobei die Kartuschenaufnahme einen in das Reservoir mündenden Druckluftanschluss (42) zum Einleiten von Druckluft in das Reservoir umfasst.

9. Getränkezubereitungsmaschine (3) zur Herstellung eines Getränks, in welche ein Kartuschensystem (1) nach einem der vorhergehenden Ansprüche einsetzbar ist, wobei die Getränkezubereitungsmaschine (3) eine Halteeinheit (90), in welche die mit der Kartusche (2) verbundene Kartuschenaufnahme (10) einsetzbar ist, aufweist.

10. Getränkezubereitungsmaschine (3) nach Anspruch 9, wobei die Halteeinheit (90) wenigstens ein Kontaktelement aufweist, welches das Identifikationsmittel des Kartuschensystems (1) kontaktiert, um wenigstens einen physikalischen Parameter des Identifikationsmittels zur Identifikation des Kartuschensystems (1) zu bestimmen.

11. Getränkezubereitungsmaschine nach Anspruch 10, wobei die Getränkezubereitungsmaschine eine mit dem wenigstens einen Kontaktelement verbundene Messeinheit zur Messung des elektrischen Widerstands und/oder der elektrischen Leitfähigkeit des Identifikationsmittels umfasst.

12. Getränkezubereitungsmaschine nach Anspruch 11, wobei das Kontaktelement eine Aufstechspitze umfasst, welche eine Wandung des Kartuschensystems durchstößt, um beim Messen des wenigstens eines physikalischen Parameters in Kontakt mit dem Identifikationsmittel zu gelangen.

13. Getränkezubereitungsmaschine nach einem der Ansprüche 9 bis 12, wobei die Getränkezubereitungsmaschine (3) eine Fluidquelle (91) zum Einspeisen eines Fluids in die Fluidzuführung (12) und eine Druckluftquelle (41) zum Einblasen von Druckluft in den Druckluftanschluss (42) aufweist.

14. Getränkezubereitungsmaschine nach einem der Ansprüche 9 bis 13, wobei die Halteeinheit (90) ein Auslöseelement (36) aufweist, um ein Aufstechmittel (16) der Kartuschenaufnahme (10) von einer eingefahrenen Position in eine ausgefahrene Position zu überführen.

15. Getränkezubereitungsmaschine nach einem der Ansprüche 9 bis 14, wobei die Halteeinheit (90) einen Befestigungsflansch umfasst, welcher die Kartuschenaufnahme (10) beim oder nach dem Einsetzen in die Halteeinheit formschlüssig und/oder kraftschlüssig umgreift.

16. Getränkezubereitungsmaschine nach Anspruch 15, wobei das Kontaktelement in den Befestigungsflansch integriert ist.

17. System aufweisend eine Getränkezubereitungsmaschine nach einem der Ansprüche 9 bis 16 und ein in die Halteeinheit (90) einsetzbares Kartuschensystem (1) nach einem der Ansprüche 1 bis 8.

## Claims

1. Cartridge system (1) for producing a beverage, wherein the cartridge system (1) is insertable into a beverage preparation machine (3), wherein the cartridge system (1) has a cartridge (2) comprising a reservoir (6) filled with a beverage substance (7), and a cartridge receptacle (10) connected to the cartridge (2), wherein the cartridge receptacle (10) has a mixing chamber (8) which is fluidically connectable to the reservoir (6), and a fluid supply (12) which opens into the mixing chamber (8), wherein the cartridge system (1) comprises an identification means (20) for identifying the cartridge system (1) in the beverage preparation machine (3), **characterized in that** the identification element (21) is disposed within the reservoir (6) and/or the mixing chamber (8).

2. Cartridge system (1) according to Claim 1, wherein the identification means (20) comprises a coating (22), in particular in the form of a lacquer, an imprint or a film, on an inner surface of the cartridge (2) and/or the cartridge receptacle (10).

3. Cartridge system (1) according to one of the preceding claims, wherein the identification means (20) is disposed along a longitudinal axis of the cartridge system (1), between the reservoir (6) and the mixing chamber (8).

4. Cartridge system (1) according to one of the preceding claims, wherein the identification element (22) is connected to the cartridge (2), the cartridge receptacle (10) and/or the neck in a force-fitting, materially integral and/or form-fitting manner, in particular adhesively bonded, welded, latched and/or press-fitted.

5. Cartridge system (1) according to one of the preceding claims, wherein the identification element (22) is integrally connected to the cartridge (2), the cartridge receptacle (10) and/or the neck, and is in particular integrated in the cartridge (2), the cartridge receptacle (10) and/or the neck.

6. Cartridge system (1) according to one of the preceding claims, wherein the identification means is an optically readable code disposed on the inside of an at least partially optically transparent wall of the reservoir or the mixing chamber, in particular a one-dimensional or multi-dimensional barcode, a pattern or a hologram.

7. Cartridge system (1) according to one of the preceding claims, wherein the beverage substrate functions as an identification means.

8. Cartridge system (1) according to one of the preceding claims, wherein the cartridge receptacle comprises a compressed air connector (42) which opens into the reservoir for directing compressed air into the reservoir.

9. Beverage preparation machine (3) for producing a beverage, into which a cartridge system (1) according to one of the preceding claims is insertable, wherein the beverage preparation machine (3) has a holding unit (90) into which the cartridge receptacle (10) connected to the cartridge (2) is insertable.

10. Beverage preparation machine (3) according to Claim 9, wherein the holding unit (90) has at least one contact element that contacts the identification means of the cartridge system (1) in order to determine at least one physical parameter of the identification means for identifying the cartridge system (1).

11. Beverage preparation machine according to Claim 10, wherein the beverage preparation machine comprises a measuring unit which is connected to the at least one contact element for measuring the electrical resistance and/or the electrical conductivity of the identification means.

12. Beverage preparation machine according to Claim 11, wherein the contact element comprises a piercing tip which penetrates a wall of the cartridge system in order to come into contact with the identification means when measuring the at least one physical parameter.

13. Beverage preparation machine according to one of Claims 9 to 12, wherein the beverage preparation machine (3) has a fluid source (91) for feeding a fluid into the fluid supply (12), and a compressed air source (41) for blowing compressed air into the compressed air connector (42).

14. Beverage preparation machine according to one of Claims 9 to 13, wherein the holding unit (90) has a trigger element (36) to transfer a piercing means (16) of the cartridge receptacle (10) from a retracted position to an extended position.

15. Beverage preparation machine according to one of Claims 9 to 14, wherein the holding unit (90) comprises a fastening flange which in a form-fitting and/or force-fitting manner encompasses the cartridge receptacle (10) during or after insertion into the holding unit.

16. Beverage preparation machine according to Claim 15, wherein the contact element is integrated in the fastening flange.

17. System having a beverage preparation machine according to one of Claims 9 to 16, and a cartridge system (1) according to one of Claims 1 to 8, which is insertable into the holding unit (90).

## Revendications

1. Système de cartouche (1) pour la production d'une boisson, le système de cartouche (1) pouvant être inséré dans une machine de préparation de boissons (3), le système de cartouche (1) présentant une cartouche (2) qui comprend un réservoir (6) rempli d'une substance de boisson (7), et un logement de cartouche (10) relié à la cartouche (2), le logement de cartouche (10) présentant une chambre de mélange (8) pouvant être mise en communication fluidique avec le réservoir (6) et une amenée de fluide (12) débouchant dans la chambre de mélange (8), le système de cartouche (1) comprenant un moyen **d'identification** (20) pour identifier le système de cartouche (1) dans la machine de préparation de boissons (3), **caractérisé en ce que** l'élément d'identification (21) est agencé à l'intérieur du réservoir (6) et/ou de la chambre de mélange (8).

2. Système de cartouche (1) selon la revendication 1, dans lequel le moyen **d'identification** (20) comprend un revêtement (22), notamment sous la forme d'un vernis, d'une impression ou d'un film, sur une surface intérieure de la cartouche (2) et/ou du logement de cartouche (10).

3. Système de cartouche (1) selon l'une quelconque des revendications précédentes, dans lequel le moyen d'identification (20) est agencé le long d'un axe longitudinal du système de cartouche (1) entre le réservoir (6) et la chambre de mélange (8).

4. Système de cartouche (1) selon l'une quelconque des revendications précédentes, dans lequel l'élément d'identification (22) est relié à la cartouche (2), au logement de cartouche (10) et/ou au col par adhérence, par liaison de matière et/ou par complémentarité de forme, notamment par collage, par soudage, par encliquetage et/ou par compression.

5. Système de cartouche (1) selon l'une quelconque des revendications précédentes, dans lequel l'élément d'identification (22) est relié d'un seul tenant à la cartouche (2), au logement de cartouche (10) et/ou au col et est notamment intégré à la cartouche (2), au logement de cartouche (10) et/ou au col.

6. Système de cartouche (1) selon l'une quelconque des revendications =- précédentes, dans lequel le moyen d'identification est un code lisible optiquement, notamment un code à barres unidimensionnel ou multidimensionnel, un motif ou un hologramme, agencé sur le côté intérieur d'une paroi au moins partiellement transparente optiquement du réservoir ou de la chambre de mélange.

7. Système de cartouche (1) selon l'une quelconque des revendications précédentes, dans lequel le substrat de boisson fait office de moyen d'identification.

8. Système de cartouche (1) selon l'une quelconque des revendications précédentes, dans lequel le logement de cartouche comprend un raccord d'air comprimé (42) débouchant dans le réservoir pour introduire de l'air comprimé dans le réservoir.

9. Machine de préparation de boissons (3) pour la production d'une boisson, dans laquelle un système de cartouche (1) selon l'une quelconque des revendications précédentes peut être inséré, la machine de préparation de boissons (3) présentant une unité de maintien (90) dans laquelle le logement de cartouche (10) relié à la cartouche (2) peut être inséré.

10. Machine de préparation de boissons (3) selon la revendication 9, dans laquelle l'unité de maintien (90) présente au moins un élément de contact qui entre en contact avec le moyen d'identification du système de cartouche (1) afin de déterminer au moins un paramètre physique du moyen d'identification pour identifier le système de cartouche (1).

11. Machine de préparation de boissons selon la revendication 10, dans laquelle la machine de préparation de boissons comprend une unité de mesure connectée à l'au moins un élément de contact pour mesurer la résistance électrique et/ou la conductivité électrique du moyen d'identification.

12. Machine de préparation de boissons selon la revendication 11, dans laquelle l'élément de contact comprend une pointe de perçage qui transperce une paroi du système de cartouche pour entrer en contact avec le moyen d'identification lors de la mesure de l'au moins un paramètre physique.

13. Machine de préparation de boissons selon l'une quelconque des revendications 9 à 12, dans laquelle la machine de préparation de boissons (3) comprend une source de fluide (91) pour introduire un fluide dans l'amenée de fluide (12) et une source d'air comprimé (41) pour injecter de l'air comprimé dans le raccord d'air comprimé (42).

14. Machine de préparation de boissons selon l'une quelconque des revendications 9 à 13, dans laquelle l'unité de maintien (90) présente un élément de déclenchement (36) pour transférer un moyen de perçage (16) du logement de cartouche (10) d'une position rétractée à une position déployée.

15. Machine de préparation de boissons selon l'une quelconque des revendications 9 à 14, dans laquelle l'unité de maintien (90) comprend une bride de fixation qui entoure le logement de cartouche (10) par complémentarité de forme et/ou par adhérence lors de l'insertion dans l'unité de maintien ou après celle-ci.

16. Machine de préparation de boissons selon la revendication 15, dans laquelle l'élément de contact est intégré dans la bride de fixation.

17. Système présentant une machine de préparation de boissons selon l'une quelconque des revendications 9 à 16 et un système de cartouche (1)selon l'une quelconque des revendications 1 à 8 insérable dans l'unité de maintien (90).
